## Europäisches Patentamt

## European Patent Office

## Office européen des brevets

(11) Veröffentlichungsnummer: **0 299 261**
**A1**

(12) **EUROPÄISCHE PATENTANMELDUNG**

(21) Anmeldenummer: 88110199.2

(22) Anmeldetag: 27.06.88

(51) Int. Cl.⁴ **F16J 15/52 , F16D 3/84**

(30) Priorität: **14.07.87 DE 3723185**

(43) Veröffentlichungstag der Anmeldung:
**18.01.89 Patentblatt 89/03**

(84) Benannte Vertragsstaaten:
**DE FR GB SE**

(71) Anmelder: **FORD-WERKE AKTIENGESELLSCHAFT**
**Werk Köln-Niehl Henry-Ford-Strasse**
**Postfach 60 40 02**
**D-5000 Köln 60(DE)**

(84) **DE SE**

(71) Anmelder: **FORD MOTOR COMPANY LIMITED**
**Eagle Way**
**Brentwood Essex CM13 3BW(GB)**

(84) **GB**

(71) Anmelder: **FORD FRANCE SOCIETE ANONYME**
**344 Avenue Napoléon Bonaparte B.P. 307**
**F-92506 Rueil Malmaison Cedex(FR)**

(84) **FR**

(72) Erfinder: **Kugler, Helmut**
**Aug.-Kierper-Strasse 113**
**D-5060 Bergisch-Gladbach(DE)**
Erfinder: **Lauenstein, Christian**
**Heinering 110**
**D-5000 Köln 71(DE)**

(74) Vertreter: **Ritzkowsky, Harald, Dipl.-Ing. et al**
**Ford-Werke Aktiengesellschaft**
**Patentabteilung NH/DRP Henry-Ford-Strasse**
**D-5000 Köln 60(DE)**

(54) **Lüftungseinrichtung für Manschetten und dergleichen.**

(57) Bei einer Entlüftungseinrichtung für Manschetten und dergleichen, mit im Bereich des Manschettensitz-Durchmessers angeordneten axialen und radialen Lüftungskanälen, sind axiale und radiale Lüftungskanäle (8 und 9) im Manschettensitzring (7) derart ausgebildet und angeordnet, daß der radiale Entlüftungskanal (9) durch den aufgesetzten Befestigungsbinder (10) für die Manschette (3) bleibend dicht verschlossen wird.

FIG.2

## Lüftungseinrichtung für Manschetten und dergleichen

Die Erfindung bezieht sich auf eine Lüftungseinrichtung für Manschetten und dergleichen, der im Oberbegriff des Patentanspruchs 1 erläuterten Art.

Aus der DE-OS 23 63 442, insbesondere deren Fig. 5 ist eine Lüftungseinrichtung für Manschetten und dergleichen bei einem Zahnstangenlenkgetriebe von Kraftfahrzeugen bekannt, wobei axiale und radiale Lüftungskanäle im Bereich des Manschettensitz-Durchmessers angeordnet sind.

Die bekannte Entlüftungseinrichtung ist als Dauerentlüftung ausgelegt und weist somit den Nachteil auf, daß durch Druckschwankungen und dergleichen Feuchtigkeit und Schmutz in das Innere der Manschette eintreten kann. Darüber hinaus sind die axialen und radialen Lüftungskanäle im Manschettensitz des Gehäuses angeordnet, wo sie durch verhältnismäßig aufwendige Bearbeitung vorgesehen werden müssen.

Die Aufgabe der Erfindung ist eine Lüftungseinrichtung für Manschetten und dergleichen der im Oberbegriff des Patentanspruches erläuterten Art als Montageentlüftung auszubilden und dies mit möglichst geringem Bauaufwand zu erzielen.

Gemäß der Erfindung wird diese Aufgabe gelöst, indem bei einer Entlüftungseinrichtung gemäß dem Oberbegriff des Patentanspruches die im Kennzeichenteil des Patentanspruches aufgezeigten Merkmale und Maßnahmen vorgesehen werden.

Dadurch, daß die axialen und radialen Lüftungskanänle im kleineren Manschettensitzring der Manschette ausgebildet und angeordnet sind, können diese Kanäle in einem Arbeitsgang bei der Herstellung der aus elastischem Material bestehenden Manschette vorgesehen werden. Dadurch, daß der radiale Entlüftungskanal durch den aufgesetzten Befestigungsbinder für die Manschette übergriffen und bleibend dicht verschlossen wird, wird die für die Montage vorgesehene Entlüftungseinrichtung zuverlässig unwirksam gemacht, so daß während des normalen Betriebes der Manschette weder durch Druckschwankungen noch durch Kapillarwirkung Feuchtigkeit oder Schmutz in das Innere der Manschette gelangen kann.

Die Erfindung wird anhand eines in der Zeichnung gezeigten Ausführungsbeispieles näher erläutert. Es zeigt:

Fig. 1 einen vertikalen Schnitt durch eine Vorderachs-Antriebswelle mit einer aufgesetzten Faltenbalgmanschette mit einer erfindungsgemäßen Montage-Entlüftungseinrichtung;

Fig. 2 zeigt eine vergrößerte Darstellung des in Fig. 1 in Strich-Punkt-Linien im Kreis II hervorgehobenen Entlüftungsbereiches;

Fig. 3 einen Schnitt entlang der Linie III-III in Fig. 2.

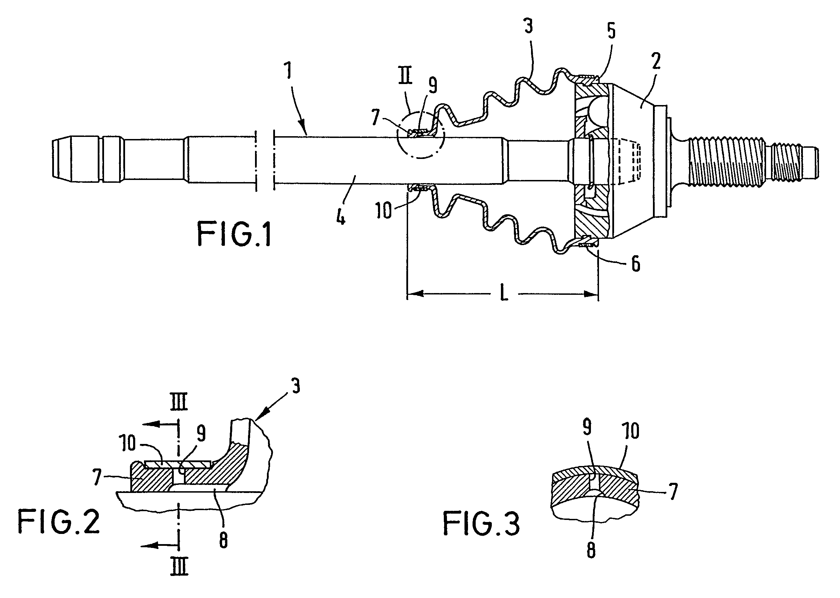

Bei dem in Fig. 1 gezeigten Vorderachs-Antriebswelle-Unteraggregat 1 wird die Manschette 3 auf die Antriebswelle 4 aufgeschoben und vormontiert, darauffolgend wird das Universalgelenk 2 auf der Antriebswelle 4 montiert und gesichert.

Nun wird Schmiermittel auf der offenen Seite des Universalgelenkes 2 eingefüllt und die Manschette 3 wird mit ihrem größeren Manschettensitzring 5 auf dem Universalgelenk 2 mittels eines Befestigungsbinders 6 befestigt.

Um die gewünschte Betriebslage der Manschette 3 herzustellen, wird ihr kleinerer Manschettensitzring 7 auf der Antriebswelle 4 verschoben, bis der Abstand L eingehalten ist. Bei dieser Einstellung der Betriebslage vollzieht sich der erforderliche atmosphärische Druckausgleich über im kleineren Manschettensitzring 7 eingeformte Entlüftungskanäle, einem am Innendurchmesser des einen Manschettensitzringes 7 sich axial erstreckender halbrunder Lüftungskanal 8 und einem sich radial erstreckenden runden Lüftungskanal 9.

Dadurch ist während der Montage eine ausreichende Entlüftung gewährleistet, die durch Aufsetzen eines Befestigungsbinders 10 von im wesentlichen herkömmlicher Bauart zuverlässig für den weiteren Betrieb verschlossen wird, so daß in das Innere der mit einem entsprechenden Schmiermittel für das Universalgelenk gefüllten Faltenbalgmanschette keine Feuchtigkeit und kein Schmutz eindringen kann.

## Ansprüche

Entlüftungseinrichtung für Manschetten und dergleichen, mit im Bereich des Manschettensitz-Durchmessers angeordneten axialen und radialen Lüftungskanälen, **dadurch gekennzeichnet**, daß die axialen und radialen Lüftungskanäle (8 und 9) im kleineren Manschettensitzring (7) derart ausgebildet und angeordnet sind, daß der axiale Entlüftungskanal (8) mit dem Innenraum der Manschette (3) und der radiale Entlüftungskanal (9) mit dem axialen Entlüftungskanal (8) und der Außenatmosphäre in Verbindung steht und der radiale Entlüftungskanal (9) durch den aufgesetzten Befestigungsbinder (10) für die Manschette (3) bleibend dicht verschlossen wird.

FIG.1

FIG.2

FIG.3

EP 0 299 261 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | GB-A-2 071 790 (LÖHR & BROMKAMP) <br> * Figur 1; Zusammenfassung * <br> --- | 1 | F 16 J 15/52 <br> F 16 D 3/84 |
| Y | FR-A-2 580 761 (C.P.I.O.) <br> * Figuren 14-15; Seite 11, Zeilen 10-16 * <br> --- | 1 | |
| A,D | DE-A-2 363 442 (ZAHNRADFABRIK FRIEDRICHSHAFEN AG) <br> * Insgesamt * <br> --- | 1 | |
| A | FR-A-2 414 144 (CITROEN) <br> * Figuren 2,3 * <br> ----- | 1 | |

**RECHERCHIERTE SACHGEBIETE (Int. Cl.4)**

F 16 J
F 16 D

Der vorliegende Recherchenbericht wurde für alle Patentansprüche erstellt

| Recherchenort | Abschlußdatum der Recherche | Prüfer |
|---|---|---|
| DEN HAAG | 07-10-1988 | NARMINIO A. |